# EUROPEAN PATENT SPECIFICATION

(11) **EP 3 841 793 B1**
(45) Date of publication and mention of the grant of the patent: **02.09.2026**
(21) Application number: 19851453.1
(22) Date of filing: 16.08.2019
(51) Int. Cl.: H04W 48/16, H04W 8/24, H04J 11/00, H04B 7/0408

(54) **SYSTEMS AND METHODS OF UE CAPABILITY INDICATION FOR CELL IDENTIFICATION DELAY REQUIREMENTS**
SYSTEME UND VERFAHREN ZUR UE-FÄHIGKEITSANZEIGE FÜR ZELLIDENTIFIKATIONSVERZÖGERUNGSANFORDERUNGEN
SYSTÈMES ET PROCÉDÉS D'INDICATION D'UNE CAPACITÉ D'UE EN LIEN AVEC DES EXIGENCES DE RETARD D'IDENTIFICATION DE CELLULE

(30) Priority: 20.08.2018 US 201862720041 P
(43) Date of publication of application: 30.06.2021
(73) Proprietor: INTEL Corporation, Santa Clara, CA 95054 (US)
(72) Inventor: RAGHAVAN, Manasa, Sunnyvale, California 94087 (US); CUI, Jie, Santa Clara, California 95054 (US); TANG, Yang, Santa Clara, California 95052 (US)
(74) Representative: HGF
(86) International application number: PCT/US2019/046797
(87) International publication number: WO 2020/041125

(56) References cited:
- WO-A1-2018/028393
- KR-A- 20180 036 995
- US-A1- 2016 269 919
- US-A1- 2018 103 474
- ERICSSON: "FR2 measurement procedures with UE RX beamforming", vol. RAN WG4, no. Gothenburg, Sweden; 20180820 - 20180824, 10 August 2018 (2018-08-10), XP051578789, Retrieved from the Internet <URL:http://www.3gpp.org/ftp/tsg%5Fran/WG4%5FRadio/TSGR4%5F88/Docs/R4%2D1809749%2Ezip> [retrieved on 20180810]
- "RAN4#86 Meeting report", vol. RAN WG4, no. Melbourne, Australia; 20180416 - 20180420, 12 April 2018 (2018-04-12), XP051436153, Retrieved from the Internet <URL:http://www.3gpp.org/ftp/tsg%5Fran/WG4%5FRadio/TSGR4%5F86/Report/> [retrieved on 20180412]
- "5G; NR; Requirements for support of radio resource management (3GPP TS 38.133 version 15.2.0 Release 15", ETSI TS 138 133, 25 July 2018 (2018-07-25), XP055687257

## Description

### Technical Field

This application relates generally to wireless communication systems, and more specifically to delay requirements for cell identification.

### Background

Wireless mobile communication technology uses various standards and protocols to transmit data between a base station and a wireless mobile device. Wireless communication system standards and protocols can include the 3rd Generation Partnership Project (3 GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless RANs, RAN Nodes can include a 5G Node, new radio (NR) node or g Node B (gNB).

Document "FR2 measurement procedures with UE RX beamforming", Ericsson, 3GPP Draft, R4-1809749, discloses UE FR2 mobility type 1 and type 2 requirements.

Document "RAN4#86 Meeting Report", 3GPP Draft, R4-1803601, discloses UE feature lists for CA/EN-DC, other capabilities, and LTE-NR co-existence; RRM requirements in DRX mode; and RRM core requirements with Rx beamforming in FR2.

### Summary

The present invention is defined in the appended set of claims.

### Brief Description of the Drawings

FIG. 1 is flow chart illustrating a method for a UE to set a cell identification delay parameter in accordance with one embodiment.
FIG. 2 is a flow chart illustrating a method to determine a cell identification delay parameter in accordance with one embodiment.
FIG. 3 illustrates a method in accordance with one embodiment.
FIG. 4 illustrates a method in accordance with one embodiment.
FIG. 5 illustrates a method in accordance with one embodiment.
FIG. 6 illustrates a method in accordance with one embodiment.
FIG. 7 illustrates a system in accordance with one embodiment.
FIG. 8 illustrates a device in accordance with one embodiment.
FIG. 9 illustrates an example interfaces in accordance with one embodiment.
FIG. 10 illustrates components in accordance with one embodiment.

### Detailed Description

In 5G/NR systems, the intra frequency cell identification delay requirements include a time period used in primary synchronization signal (PSS) detection and/or secondary synchronization signal (SSS) detection (PSS/SSS detection) (T_{PSS/SSS_sync}), a time period used to acquire the index of a synchronization signal block (SSB) being measured (T_{SSB_time_index}), and a measurement period of SSB based measurement (T_{SSB_measurement_period}). In certain implementations, the cell identification delay requirements are defined as follows.

The UE is able to identify a new detectable intra frequency cell within T_{identify_intra_without_index} if the UE is not indicated to report SSB based radio resource management (RRM) measurement result with the associated SSB index, or the UE has been indicated that the neighbor cell is synchronous with the serving cell. Otherwise the UE is able to identify a new detectable intra frequency cell within T_{identif_intra_with_index}. The UE may be able to identify a new detectable intra frequency SS block of an already detected cell within T_{identify_intra_without_index} = K_{ca} (T_{PSS/SSS_sync} + T _{SSB_measurement_period}) milliseconds (ms), or Tidentify_intra_{_with_index} = K_{ca} (T_{PSS/SSS_sync} + T _{SSB_measurement_period} + T_{SSB_time_index}) ms, where:
T_{PSS/SSS_sync} is the time period used in PSS/SSS detection, e.g., which may be given in 3GPP TS 38.133 Tables 9.2.5.1-1, 9.2.5.1-2, 9.2.5.1-5 (deactivated secondary cell (SCell)) or 9.2.5.1-6 (deactivated SCell); T_{SSB_time_index} is the time period used to acquire the index of the SSB being measured, e.g., which may be given in 3GPP TS 38.133 Tables 9.2.5.1-3 or 9.2.5.1-4 or 9.2.5.1-7 (deactivated SCell) or 9.2.5.1-8 (deactivated SCell);
T_{SSB_measurement_period} is equal to a measurement period of SSB based measurement, e.g., which may be given in Tables 9.2.5.2-1, table 9.2.5.2-2 table 9.2.5.2-3 (deactivated SCell) or 9.2.5.2-4(deactivated SCell); and for FR1, K_{ca} = 1 for measurements on frequencies corresponding to primary cell (PCell) or primary SCell (PSCell), and K_{ca} = number of configured SCells for measurements on frequencies corresponding to FR1 only SCells.

NR wireless communication systems support operation in FR1 (frequency range 1) which spans the carrier frequencies from 410 MHz to 7125 MHz, and in FR2 (frequency range 2) which spans the carrier frequencies from 24.25 GHz to 52.60 GHz and is also known as mmWave range.

In FR1, the time period for detection and measurement is defined based on a generic formula without measurement gaps: max(lower_bound, number_of_samples × SMTC_period),
where the lower bound, number of samples is derived based on a UE mobility and power consumption trade-off, simulation, and numerical analysis for the required acquisition or measurement.

In FR2, the UE may need to perform receive (Rx) beam sweeping in order to identify the cell and the generic formula for the acquisition and measurement is defined as: max(lower_bound, N × number_of_samples × SMTC_period), where N is a scale factor to account for Rx beam sweeping. However, the value of N may become large and unnecessarily increase the delay requirement. The number of Rx beams used by the UE is up to UE implementation, and to have a single number to define requirements may be difficult. Different UE types could have different numbers of antenna elements and support different numbers of Rx beams. Having a large value for N impacts mobility requirements, whereas as having a small value for N does not accommodate all types of UEs.

According to various embodiments herein, a UE may indicate its capability for Rx beam forming in order for the network to adjust the timers and delay requirement for cell identification. In one embodiment, for example, a UE provides UE capability information to a network to indicate a UE power class supported by the UE, and the network sets the cell identification delay parameter based on the UE power class. In addition, or in other embodiments, the UE may indicate: a UE capability in terms of time needed for cell identification, e.g., long delay, medium delay, or short delay; a number of Rx beams used by the UE for SSB based measurements; and/or a UE mobility state and/or UE type, e.g., stationary or low mobility, medium mobility, and/or high mobility. Based on signaling associated with one or more of the above types of UE capability information, the network may adjust the delay requirement for the UE and timers accordingly.

In FR2, due to different UE implementations and different UE types, the number of Rx beams and the delay requirements could be different for different UEs. However, according to certain embodiments herein based on UE capability signaling, the delay requirement may be adjusted for the types of UEs and/or UE capabilities to reduce unnecessary delay in cell identification.

The requirements for PSS/SSS detection, SSB index acquisition, and measurement in FR2 were defined in 3GPP TS 38.133 as shown in Table 1 (corresponding to Table 9.2.5.1-2 of 3GPP TS 38.133), Table 2 (corresponding to Table 9.2.5.1-4 of 3GPP TS 38.133), and Table 3 (corresponding to Table 9.2.5.2-2 of 3GPP TS 38.133).

**Table 1: Time period for PSS/SSS detection, (frequency range FR2)**

| DRX cycle | T_{PSS/SSS_sync} |
|---|---|
| No DRX | max[600ms, ceil( [5] x Kₚ) x N₁ x SMTC period ](Note 1) |
| DRX cycle≤ 320ms | max[600ms, ceil(1.5 x [5] × Kₚ) x N₁ x max(SMTC period,DRX cycle)] |
| DRX cycle>320ms | Ceil([5] x Kₚ) x N₁ x DRX cycle |
| ... | ... |
| NOTE 1: If different SMTC periodicities are configured for different cells, the SMTC period in the requirement is the one used by the cell being identified | |

**Table 2: Time period for time index detection (frequency range FR2)**

| DRX cycle | T_{SSB_time_index} |
|---|---|
| No DRX | max[ 200ms, ceil( [5] x Kₚ) x N₂ x SMTC period ](Note 1) |
| DRX cycle≤ 320ms | max[ 200ms, cell (1.5 x[5] x Kₚ) x N₂ x max(SMTC period DRX cycle) ] |
| DRX cycle>320ms | Ceil( [5] x Kp) x N₂ x DRX cycle |
| ... | ... |
| NOTE 1: If different SMTC periodicities are configured for different cells, the SMTC period in the requirement is the one used by the cell being identified | |

**Table 3: Measurement period for intra frequency measurements without gaps (frequency range FR2)**

| DRX cycle | T _{SSS_measurement_period} |
|---|---|
| No DRX | max[ 400ms, ceil( 5 x Kₚ) x N₃ x SMTC period ](Note 1) |
| DRX cycle≤ 320ms | max[ 400ms, ceil(1.5x 5 x Kₚ) x N₃ x max(SMTC period,DRX cycle) ] |
| DRX cycle>320ms | ceil(5 xKₚ ) x N₃ x DRX cycle |
| Note 1: If diferent SMTC periodicities are configured for different cells, the SMTC period in the requirement is the one used by the cell being identified | |

Although the examples herein are related to intra frequency measurements and cell identification, certain embodiments also apply to inter frequency measurements and cell identification.

When intra frequency SSB based measurement timing configuration (SMTC) is fully non overlapping with measurement gaps, Kp=1. For a measurement gap repetition period (MGRP), when intra frequency is partially overlapping with measurement gaps, Kp = 1/(1- (SMTC period /MGRP)), where SMTC period < MGRP.

In FR2, to detect multiple intra-frequency cells, the UE performs Rx beam sweeping. The number of Rx beams used by the UE may depend on several factors. For example, the number of Rx beams may depend on the UE type such as a handheld UE versus customer premises equipment (CPE). A handheld UE, for example, may have more mobility than CPE and/or more antenna elements than CPE. The number of Rx beams used by the UE may depend on the number of antenna panels and antenna elements per panel.

Further, the number of Rx beams used by the UE may depend on UE implementation. As discussed above, a single value for scale factor (N) might not accommodate different UE types and implementations. Thus, in some embodiments herein, UE capability signaling may be defined in order for the network to adjust times and delay requirements for cell identification. The UE capability signaling could be provided in many ways and the cell identification delay requirement (also referred to herein as cell identification delay parameter) modified accordingly.

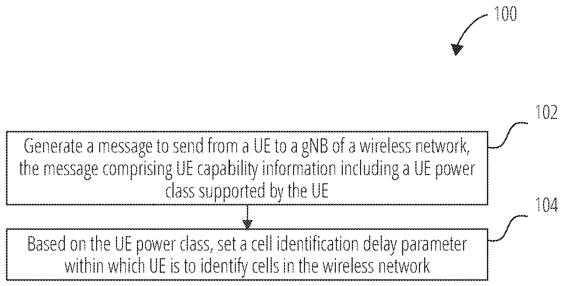

FIG. 1 is a flow chart illustrating a method 100 for a UE to set a cell identification delay parameter according to one embodiment which is covered by the claims. In block 102, the UE generates a message to send from the UE to a wireless network. The message comprises UE capability information including a UE power class supported by the UE. In block 104, based on the UE power class, the UE sets a cell identification delay parameter within which the UE is to identify cells in the wireless network.

The cell identification delay parameter (e.g., T_{identify_intra_with_index}) may include a time period (T_{PSS/SSS_sync}) used in PSS/SSS detection, and a measurement period (T _{SSB_measurement_period}) of an SSB based measurement. The cell identification delay parameter may also include a time period (T_{SSB_time_index}) used to acquire the index of the SSB being measured. In certain embodiments, the time period (T_{PSS/SSS_sync}) used in PSS/SSS detection may be based on the UE power class. For example, the parameter "[5]" shown in Table 1 may be replaced by parameter M_{pss/sss_sync}, where: for a UE supporting FR2 power class 1, M_{pss/sss_sync} = 40; for a UE supporting power class 2, M_{pss/sss_sync} = 24; for a UE supporting FR2 power class 3, M_{pss/sss_sync} = 24; and for a UE supporting FR2 power class 4, M_{pss/sss_sync} = 24.

In addition, or in other embodiments, the measurement period (T _{SSB_measurement_period}) of SSB based measurements may be based on the UE power class. For example, the value "5" shown in Table 3 may be replaced by parameter M_{meas_period} (along with a carrier specific scaling factor), where: for a UE supporting power class 1, M_{meas_period} = 40; for a UE supporting FR2 power class 2, M_{meas_period} = 24; for a UE supporting power class 3, M_{meas_period} = 24; and for a UE supporting power class 4, M_{meas_period} = 24.

In certain embodiments, using the power class to determine the time period (T_{PSS/SSS_sync}) used in PSS/SSS detection only applies to operation in the frequency range FR2, and not to operation in the frequency range FR1. In addition, or in other embodiments, using the power class to determine the measurement period (T _{SSB_measurement_period}) of SSB based measurements only applies to operation in the frequency range FR2, and not to operation in the frequency range FR1.

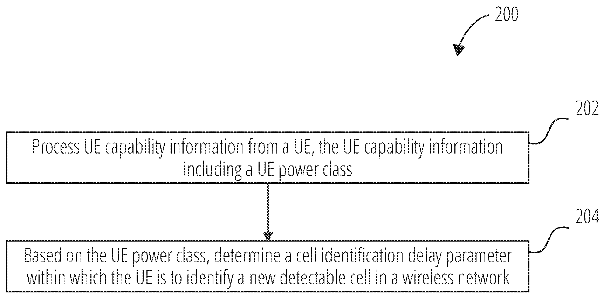

From the network perspective, FIG. 2 is a flow chart illustrating a method 200 to determine a cell identification delay parameter according to one embodiment. In block 202, the network processes UE capability information from a user equipment (UE). In block 204, based on the UE capability information from the UE, the network determines a cell identification delay parameter within which the UE is to identify a new detectable cell in the wireless network.

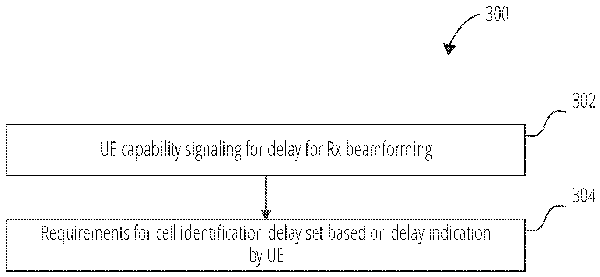

Other embodiments use one or both of two sets of requirements for a UE requiring small delay versus (vs) long delay for Rx beam sweeping. In certain such embodiments, the UE capability signaling declares short vs long delay for Rx beam sweeping and cell identification. The UE capability signaling may be based on the UE implementation and the requirements may be appropriate for all or a group of UE that requires short or longer delay for Rx beam sweeping. An example procedure for such embodiments is shown by FIG. 3, wherein a method 300 comprises a block 302 for UE capability signaling for delay for Rx beamforming, and a block 304 providing that requirements for cell identification delay are set based on the delay indication by the UE.

In one embodiment, a general formula for requirements based on UE capability signaling for short vs long delay comprises: max(lower_bound, Nₛₕₒᵣₜ × number_of_samples × SMTC_period ); and max(lower_bound, Niong × number_of_samples × SMTC_period ), where Nₛₕₒᵣₜ comprises an indication by the UE for short delay and N_{long} comprises an indication by the UE for long delay. Skilled persons will recognize from the disclosure herein that the UE may indicate other degrees of delay (e.g., medium delay, very short delay, or very long delay).

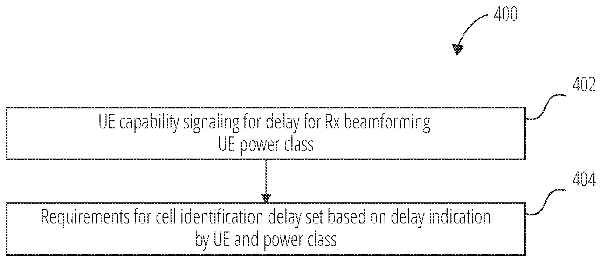

In addition, to ensure in some embodiments that the long delay requirements are set for certain UE such as CPE or fixed wireless access (FWA) that require long delay, the UE power class may be used along with UE capability. This may help ensure that a UE that actually has short Rx beamforming delay does not get assigned long delay requirements. An example procedure for such embodiments is shown by FIG. 4, wherein a method 400 comprises a block 402 for UE capability signaling for delay for Rx beamforming and UE power class, and a block 404 providing that requirements for cell identification delay are set based on the delay indication by UE and the power class.

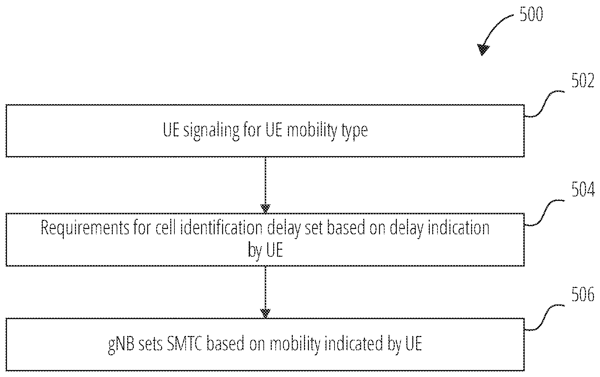

In another embodiment, the UE may indicate UE capability information that declares the UE's mobility capability, e.g., stationary, low mobility, or high mobility. A stationary UE or low mobility UE may have a large number of Rx beams and take longer time for cell identification without impacting mobility performance, whereas a high mobility UE may take a comparatively shorter time for Rx beam sweeping and cell identification. Thus, the delay requirements may be set according to the mobility type declared by the UE. The network may also set the SMTC periodicity for the cells to be measured based on the UE mobility. For example, the UE may set a lower periodicity for a high mobility UE and a higher periodicity for a low mobility or stationary UE. An example procedure for such embodiments is shown by FIG. 5, wherein a method 500 includes a block 502 for UE signaling for UE mobility type, a block 504 wherein requirements for cell identification delay are set based on the delay indication by the UE, and a block 506 wherein the gNB sets the SMTC based on the mobility indicated by the UE.

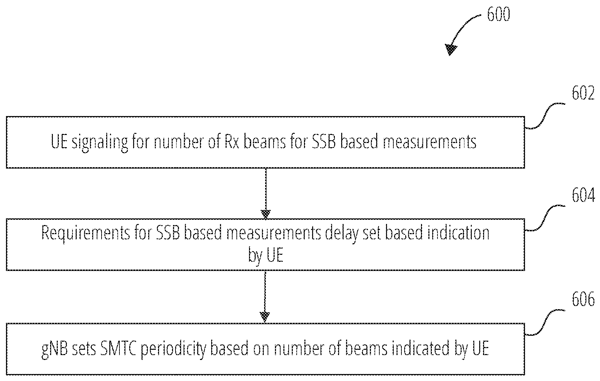

In another embodiment, a UE may signal the number of beams it uses for Rx beam sweeping for cell identification purposes. The number of beams may be used as the scale factor in requirements. There may be a UE capability indication for a maximum number of Rx beams (e.g., maxNumberRxBeam) used for a channel state information reference signal (CSI-RS). A similar signaling may indicate to the network the number of beams used for SSB based measurements, such as cell identification, radio link monitoring, and/or beam failure detection. An example procedure for such embodiments is shown in FIG. 6, wherein a method 600 includes a block 602 for UE signaling for number of Rx beams for SSB based measurements, a block 604 wherein requirements for SSB based measurements delay set based indication by UE, and a block 606 wherein the gNB sets the SMTC periodicity based on the number of beams indicated by the UE.

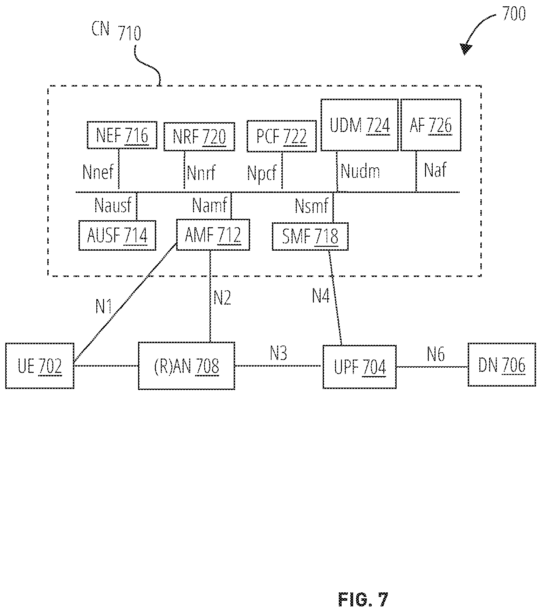

FIG. 7 illustrates an architecture of a system 700 of a network in accordance with some embodiments. The system 700 is shown to include a UE 702; a 5G access node or RAN node (shown as (R)AN node 708); a User Plane Function (shown as UPF 704); a Data Network (DN 706), which may be, for example, operator services, Internet access or 3rd party services; and a 5G Core Network (5GC) (shown as CN 710).

The CN 710 may include an Authentication Server Function (AUSF 714); a Core Access and Mobility Management Function (AMF 712); a Session Management Function (SMF 718); a Network Exposure Function (NEF 716); a Policy Control Function (PCF 722); a Network Function (NF) Repository Function (NRF 720); a Unified Data Management (UDM 724); and an Application Function (AF 726). The CN 710 may also include other elements that are not shown, such as a Structured Data Storage network function (SDSF), an Unstructured Data Storage network function (UDSF), and the like.

The UPF 704 may act as an anchor point for intra-RAT and inter-RAT mobility, an external PDU session point of interconnect to DN 706, and a branching point to support multihomed PDU session. The UPF 704 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 704 may include an uplink classifier to support routing traffic flows to a data network. The DN 706 may represent various network operator services, Internet access, or third party services.

The AUSF 714 may store data for authentication of UE 702 and handle authentication related functionality. The AUSF 714 may facilitate a common authentication framework for various access types.

The AMF 712 may be responsible for registration management (e.g., for registering UE 702, etc.), connection management, reachability management, mobility management, and lawful interception of AMF-related events, and access authentication and authorization. AMF 712 may provide transport for SM messages for the SMF 718, and act as a transparent proxy for routing SM messages. AMF 712 may also provide transport for short message service (SMS) messages between UE 702 and an SMS function (SMSF) (not shown by FIG. 7). AMF 712 may act as Security Anchor Function (SEA), which may include interaction with the AUSF 714 and the UE 702, receipt of an intermediate key that was established as a result of the UE 702 authentication process. Where USIM based authentication is used, the AMF 712 may retrieve the security material from the AUSF 714. AMF 712 may also include a Security Context Management (SCM) function, which receives a key from the SEA that it uses to derive access-network specific keys. Furthermore, AMF 712 may be a termination point of RAN CP interface (N2 reference point), a termination point of NAS (NI) signaling, and perform NAS ciphering and integrity protection.

AMF 712 may also support NAS signaling with a UE 702 over an N3 interworkingfunction (IWF) interface. The N3IWF may be used to provide access to untrusted entities. N3IWF may be a termination point for the N2 and N3 interfaces for control plane and user plane, respectively, and as such, may handle N2 signaling from SMF and AMF for PDU sessions and QoS, encapsulate/de-encapsulate packets for IPSec and N3 tunneling, mark N3 user-plane packets in the uplink, and enforce QoS corresponding to N3 packet marking taking into account QoS requirements associated to such marking received over N2. N3IWF may also relay uplink and downlink control-plane NAS (NI) signaling between the UE 702 and AMF 712, and relay uplink and downlink user-plane packets between the UE 702 and UPF 704. The N3IWF also provides mechanisms for IPsec tunnel establishment with the UE 702.

The SMF 718 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 718 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signaling for PDU session authorization/authentication by external DN.

The NEF 716 may provide means for securely exposing the services and capabilities provided by 3GPP network functions for third party, internal exposure/re-exposure, Application Functions (e.g., AF 726), edge computing or fog computing systems, etc. In such embodiments, the NEF 716 may authenticate, authorize, and/or throttle the AFs. NEF 716 may also translate information exchanged with the AF 726 and information exchanged with internal network functions. For example, the NEF 716 may translate between an AF-ServiceIdentifier and an internal 5GC information. NEF 716 may also receive information from other network functions (NFs) based on exposed capabilities of other network functions. This information may be stored at the NEF 716 as structured data, or at a data storage NF using a standardized interface. The stored information can then be re-exposed by the NEF 716 to other NFs and AFs, and/or used for other purposes such as analytics.

The NRF 720 may support service discovery functions, receive NF Discovery Requests from NF instances, and provide the information of the discovered NF instances to the NF instances. NRF 720 also maintains information of available NF instances and their supported services.

The PCF 722 may provide policy rules to control plane function(s) to enforce them, and may also support unified policy framework to govern network behavior. The PCF 722 may also implement a front end (FE) to access subscription information relevant for policy decisions in a UDR of UDM 724.

The UDM 724 may handle subscription-related information to support the network entities' handling of communication sessions, and may store subscription data of UE 702. The UDM 724 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 722 . UDM 724 may also support SMS management, wherein an SMS-FE implements the similar application logic as discussed previously.

The AF 726 may provide application influence on traffic routing, access to the Network Capability Exposure (NCE), and interact with the policy framework for policy control. The NCE may be a mechanism that allows the 5GC and AF 726 to provide information to each other via NEF 716, which may be used for edge computing implementations. In such implementations, the network operator and third party services may be hosted close to the UE 702 access point of attachment to achieve an efficient service delivery through the reduced end-to-end latency and load on the transport network. For edge computing implementations, the 5GC may select a UPF 704 close to the UE 702 and execute traffic steering from the UPF 704 to DN 706 via the N6 interface. This may be based on the UE subscription data, UE location, and information provided by the AF 726. In this way, the AF 726 may influence UPF (re)selection and traffic routing. Based on operator deployment, when AF 726 is considered to be a trusted entity, the network operator may permit AF 726 to interact directly with relevant NFs.

As discussed previously, the CN 710 may include an SMSF, which may be responsible for SMS subscription checking and verification, and relaying SM messages to/from the UE 702 to/from other entities, such as an SMS-GMSC/IWMSC/SMS-router. The SMS may also interact with AMF 712 and UDM 724 for notification procedure that the UE 702 is available for SMS transfer (e.g., set a UE not reachable flag, and notifying UDM 724 when UE 702 is available for SMS).

The system 700 may include the following service-based interfaces: Namf:
Servicebased interface exhibited by AMF; Nsmf: Service-based interface exhibited by SMF;
Nnef: Service-based interface exhibited by NEF;
Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 700 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an NS reference point may be between the PCF and the AF; an N7 reference point may be between the PCF and the SMF; and an N11 reference point between the AMF and SMF.

Although not shown by FIG. 7, the system 700 may include multiple RAN nodes (such as (R)AN node 708) wherein an Xn interface is defined between two or more (R)AN node 708 (e.g., gNBs and the like) that connecting to 5GC 410, between a (R)AN node 708 (e.g., gNB) connecting to CN 710 and an eNB (e.g., a gNB), and/or between two eNBs connecting to CN 710.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 702 in a connected mode (e.g., CMCONNECTED) including functionality to manage the UE mobility for connected mode between one or more (R)AN node 708. The mobility support may include context transfer from an old (source) serving (R)AN node 708 to new (target) serving (R)AN node 708; and control of user plane tunnels between old (source) serving (R)AN node 708 to new (target) serving (R)AN node 708.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

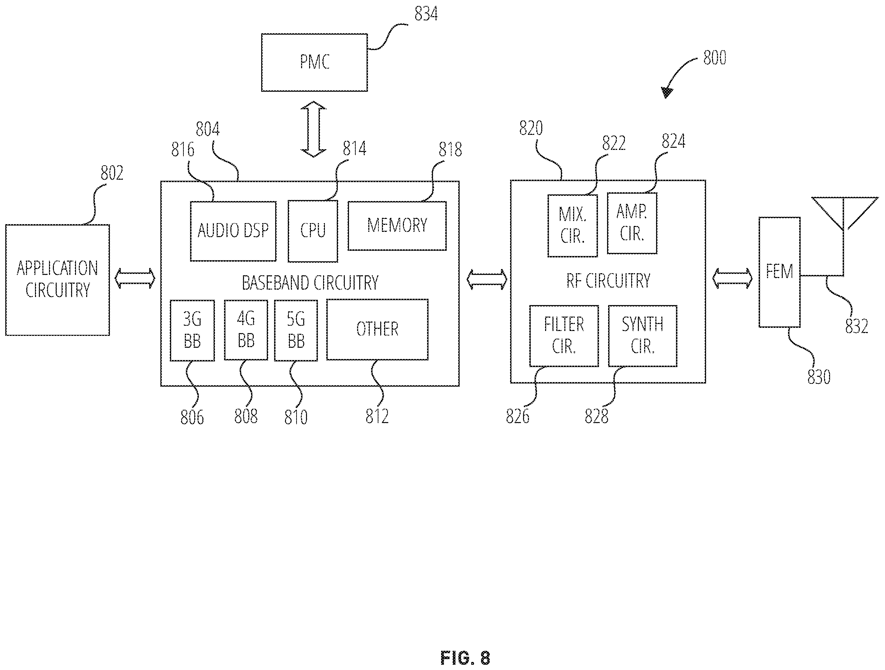

FIG. 8 illustrates example components of a device 800 in accordance with some embodiments. In some embodiments, the device 800 may include application circuitry 802, baseband circuitry 804, Radio Frequency (RF) circuitry (shown as RF circuitry 820), front-end module (FEM) circuitry (shown as FEM circuitry 830), one or more antennas 832, and power management circuitry (PMC) (shown as PMC 834) coupled together at least as shown. The components of the illustrated device 800 may be included in a UE or a RAN node. In some embodiments, the device 800 may include fewer elements (e.g., a RAN node may not utilize application circuitry 802, and instead include a processor/controller to process IP data received from an EPC). In some embodiments, the device 800 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 802 may include one or more application processors. For example, the application circuitry 802 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 800. In some embodiments, processors of application circuitry 802 may process IP data packets received from an EPC.

The baseband circuitry 804 may include circuitry such as, but not limited to, one or more single-core or multi-core processors. The baseband circuitry 804 may include one or more baseband processors or control logic to process baseband signals received from a receive signal path of the RF circuitry 820 and to generate baseband signals for a transmit signal path of the RF circuitry 820. The baseband circuitry 804 may interface with the application circuitry 802 for generation and processing of the baseband signals and for controlling operations of the RF circuitry 820. For example, in some embodiments, the baseband circuitry 804 may include a third generation (3G) baseband processor (3G baseband processor 806), a fourth generation (4G) baseband processor (4G baseband processor 808), a fifth generation (5G) baseband processor (5G baseband processor 810), or other baseband processor(s) 812 for other existing generations, generations in development or to be developed in the future (e.g., second generation (2G), sixth generation (6G), etc.). The baseband circuitry 804 (e.g., one or more of baseband processors) may handle various radio control functions that enable communication with one or more radio networks via the RF circuitry 820. In other embodiments, some or all of the functionality of the illustrated baseband processors may be included in modules stored in the memory 818 and executed via a Central Processing Unit (CPU 814). The radio control functions may include, but are not limited to, signal modulation/demodulation, encoding/decoding, radio frequency shifting, etc. In some embodiments, modulation/demodulation circuitry of the baseband circuitry 804 may include Fast-Fourier Transform (FFT), precoding, or constellation mapping/demapping functionality. In some embodiments, encoding/decoding circuitry of the baseband circuitry 804 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 804 may include a digital signal processor (DSP), such as one or more audio DSP(s) 816. The one or more audio DSP(s) 816 may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 804 and the application circuitry 802 may be implemented together such as, for example, on a system on a chip (SOC).

In some embodiments, the baseband circuitry 804 may provide for communication compatible with one or more radio technologies. For example, in some embodiments, the baseband circuitry 804 may support communication with an evolved universal terrestrial radio access network (EUTRAN) or other wireless metropolitan area networks (WMAN), a wireless local area network (WLAN), or a wireless personal area network (WPAN). Embodiments in which the baseband circuitry 804 is configured to support radio communications of more than one wireless protocol may be referred to as multi-mode baseband circuitry.

The RF circuitry 820 may enable communication with wireless networks using modulated electromagnetic radiation through a non-solid medium. In various embodiments, the RF circuitry 820 may include switches, filters, amplifiers, etc. to facilitate the communication with the wireless network. The RF circuitry 820 may include a receive signal path which may include circuitry to down-convert RF signals received from the FEM circuitry 830 and provide baseband signals to the baseband circuitry 804. The RF circuitry 820 may also include a transmit signal path which may include circuitry to up-convert baseband signals provided by the baseband circuitry 804 and provide RF output signals to the FEM circuitry 830 for transmission.

In some embodiments, the receive signal path of the RF circuitry 820 may include mixer circuitry 822, amplifier circuitry 824 and filter circuitry 826. In some embodiments, the transmit signal path of the RF circuitry 820 may include filter circuitry 826 and mixer circuitry 822. The RF circuitry 820 may also include synthesizer circuitry 828 for synthesizing a frequency for use by the mixer circuitry 822 of the receive signal path and the transmit signal path. In some embodiments, the mixer circuitry 822 of the receive signal path may be configured to down-convert RF signals received from the FEM circuitry 830 based on the synthesized frequency provided by synthesizer circuitry 828. The amplifier circuitry 824 may be configured to amplify the down-converted signals and the filter circuitry 826 may be a low-pass filter (LPF) or band-pass filter (BPF) configured to remove unwanted signals from the down-converted signals to generate output baseband signals. Output baseband signals may be provided to the baseband circuitry 804 for further processing. In some embodiments, the output baseband signals may be zero-frequency baseband signals, although this is not a requirement. In some embodiments, the mixer circuitry 822 of the receive signal path may comprise passive mixers, although the scope of the embodiments is not limited in this respect.

In some embodiments, the mixer circuitry 822 of the transmit signal path may be configured to up-convert input baseband signals based on the synthesized frequency provided by the synthesizer circuitry 828 to generate RF output signals for the FEM circuitry 830. The baseband signals may be provided by the baseband circuitry 804 and may be filtered by the filter circuitry 826.

In some embodiments, the mixer circuitry 822 of the receive signal path and the mixer circuitry 822 of the transmit signal path may include two or more mixers and may be arranged for quadrature downconversion and upconversion, respectively. In some embodiments, the mixer circuitry 822 of the receive signal path and the mixer circuitry 822 of the transmit signal path may include two or more mixers and may be arranged for image rejection (e.g., Hartley image rejection). In some embodiments, the mixer circuitry 822 of the receive signal path and the mixer circuitry 822 may be arranged for direct downconversion and direct upconversion, respectively. In some embodiments, the mixer circuitry 822 of the receive signal path and the mixer circuitry 822 of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 820 may include analog-to-digital converter (ADC) and digital-to-analog converter (DAC) circuitry and the baseband circuitry 804 may include a digital baseband interface to communicate with the RF circuitry 820.

In some dual-mode embodiments, a separate radio IC circuitry may be provided for processing signals for each spectrum, although the scope of the embodiments is not limited in this respect.

In some embodiments, the synthesizer circuitry 828 may be a fractional-N synthesizer or a fractional N/N+1 synthesizer, although the scope of the embodiments is not limited in this respect as other types of frequency synthesizers may be suitable. For example, synthesizer circuitry 828 may be a delta-sigma synthesizer, a frequency multiplier, or a synthesizer comprising a phase-locked loop with a frequency divider.

The synthesizer circuitry 828 may be configured to synthesize an output frequency for use by the mixer circuitry 822 of the RF circuitry 820 based on a frequency input and a divider control input. In some embodiments, the synthesizer circuitry 828 may be a fractional N/N+1 synthesizer.

In some embodiments, frequency input may be provided by a voltage controlled oscillator (VCO), although that is not a requirement. Divider control input may be provided by either the baseband circuitry 804 or the application circuitry 802 (such as an applications processor) depending on the desired output frequency. In some embodiments, a divider control input (e.g., N) may be determined from a look-up table based on a channel indicated by the application circuitry 802.

Synthesizer circuitry 828 of the RF circuitry 820 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 828 may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 820 may include an IQ/polar converter.

The FEM circuitry 830 may include a receive signal path which may include circuitry configured to operate on RF signals received from one or more antennas 832, amplify the received signals and provide the amplified versions of the received signals to the RF circuitry 820 for further processing. The FEM circuitry 830 may also include a transmit signal path which may include circuitry configured to amplify signals for transmission provided by the RF circuitry 820 for transmission by one or more of the one or more antennas 832. In various embodiments, the amplification through the transmit or receive signal paths may be done solely in the RF circuitry 820, solely in the FEM circuitry 830, or in both the RF circuitry 820 and the FEM circuitry 830.

In some embodiments, the FEM circuitry 830 may include a TX/RX switch to switch between transmit mode and receive mode operation. The FEM circuitry 830 may include a receive signal path and a transmit signal path. The receive signal path of the FEM circuitry 830 may include an LNA to amplify received RF signals and provide the amplified received RF signals as an output (e.g., to the RF circuitry 820). The transmit signal path of the FEM circuitry 830 may include a power amplifier (PA) to amplify input RF signals (e.g., provided by the RF circuitry 820), and one or more filters to generate RF signals for subsequent transmission (e.g., by one or more of the one or more antennas 832).

In some embodiments, the PMC 834 may manage power provided to the baseband circuitry 804. In particular, the PMC 834 may control power-source selection, voltage scaling, battery charging, or DC-to-DC conversion. The PMC 834 may often be included when the device 800 is capable of being powered by a battery, for example, when the device 800 is included in a UE. The PMC 834 may increase the power conversion efficiency while providing desirable implementation size and heat dissipation characteristics.

FIG. 8 shows the PMC 834 coupled only with the baseband circuitry 804. However, in other embodiments, the PMC 834 may be additionally or alternatively coupled with, and perform similar power management operations for, other components such as, but not limited to, the application circuitry 802, the RF circuitry 820, or the FEM circuitry 830.

In some embodiments, the PMC 834 may control, or otherwise be part of, various power saving mechanisms of the device 800. For example, if the device 800 is in an RRC_Connected state, where it is still connected to the RAN node as it expects to receive traffic shortly, then it may enter a state known as Discontinuous Reception Mode (DRX) after a period of inactivity. During this state, the device 800 may power down for brief intervals of time and thus save power.

If there is no data traffic activity for an extended period of time, then the device 800 may transition off to an RRC_Idle state, where it disconnects from the network and does not perform operations such as channel quality feedback, handover, etc. The device 800 goes into a very low power state and it performs paging where again it periodically wakes up to listen to the network and then powers down again. The device 800 may not receive data in this state, and in order to receive data, it transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 802 and processors of the baseband circuitry 804 may be used to execute elements of one or more instances of a protocol stack. For example, processors of the baseband circuitry 804, alone or in combination, may be used to execute Layer 3, Layer 2, or Layer 1 functionality, while processors of the application circuitry 802 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

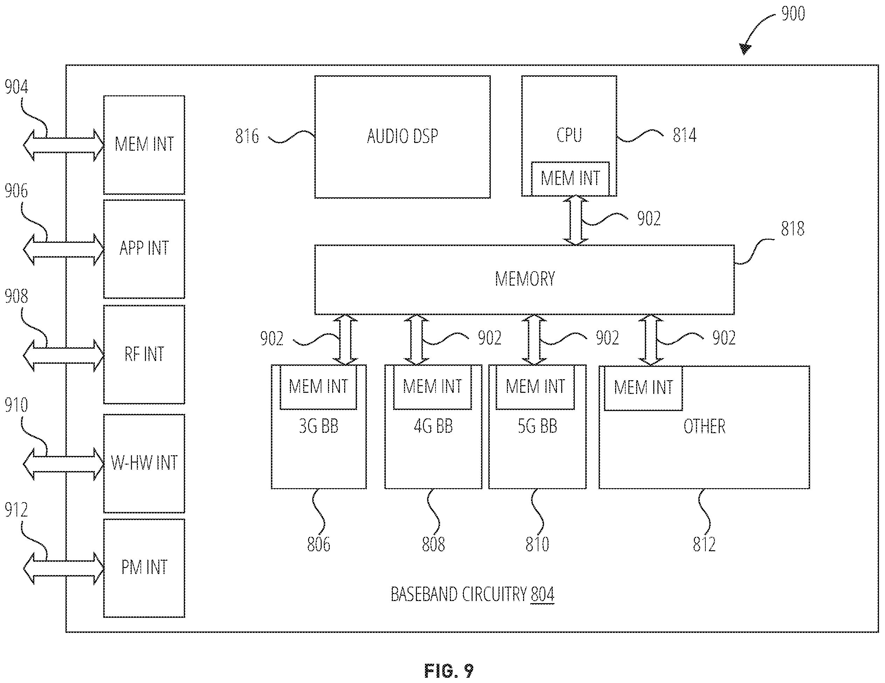

FIG. 9 illustrates example interfaces 900 of baseband circuitry in accordance with some embodiments. As discussed above, the baseband circuitry 804 of FIG. 8 may comprise 3G baseband processor 806, 4G baseband processor 808, 5G baseband processor 810, other baseband processor(s) 812, CPU 814, and a memory 818 utilized by said processors. As illustrated, each of the processors may include a respective memory interface 902 to send/receive data to/from the memory 818.

The baseband circuitry 804 may further include one or more interfaces to communicatively couple to other circuitries/devices, such as a memory interface 904 (e.g., an interface to send/receive data to/from memory external to the baseband circuitry 804), an application circuitry interface 906 (e.g., an interface to send/receive data to/from the application circuitry 802 of FIG. 8), an RF circuitry interface 908 (e.g., an interface to send/receive data to/from RF circuitry 820 of FIG. 8), a wireless hardware connectivity interface 910 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 912 (e.g., an interface to send/receive power or control signals to/from the PMC 834.

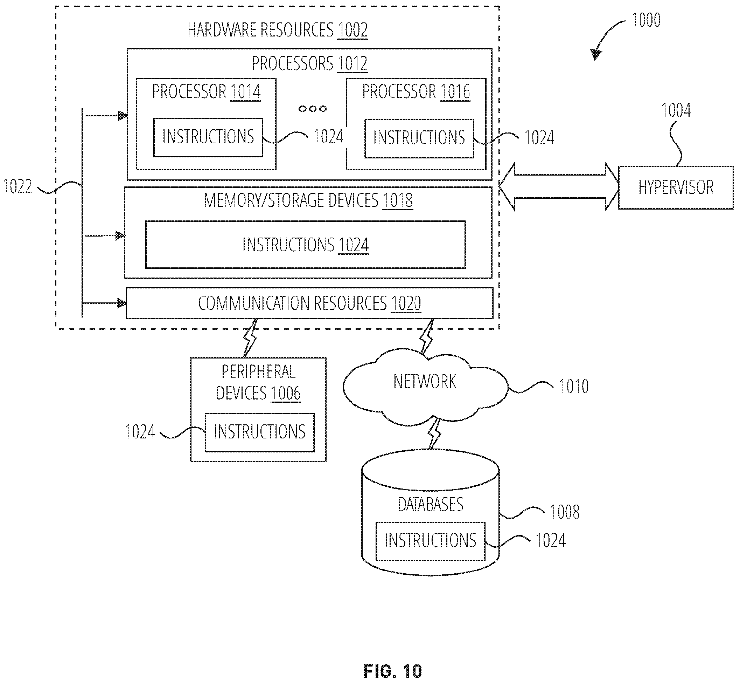

FIG. 10 is a block diagram illustrating components 1000, according to some example embodiments, able to read instructions from a machine-readable or computer-readable medium (e.g., a non-transitory machine-readable storage medium) and perform any one or more of the methodologies discussed herein. Specifically, FIG. 10 shows a diagrammatic representation of hardware resources 1002 including one or more processors 1012 (or processor cores), one or more memory/storage devices 1018, and one or more communication resources 1020, each of which may be communicatively coupled via a bus 1022. For embodiments where node virtualization (e.g., NFV) is utilized, a hypervisor 1004 may be executed to provide an execution environment for one or more network slices/sub-slices to utilize the hardware resources 1002.

The processors 1012 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1014 and a processor 1016.

The memory/storage devices 1018 may include main memory, disk storage, or any suitable combination thereof. The memory/storage devices 1018 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1020 may include interconnection or network interface components or other suitable devices to communicate with one or more peripheral devices 1006 or one or more databases 1008 via a network 1010. For example, the communication resources 1020 may include wired communication components (e.g., for coupling via a Universal Serial Bus (USB)), cellular communication components, NFC components, Bluetooth^{®} components (e.g., Bluetooth^{®} Low Energy), Wi-Fi^{®} components, and other communication components.

Instructions 1024 may comprise software, a program, an application, an applet, an app, or other executable code for causing at least any of the processors 1012 to perform any one or more of the methodologies discussed herein. The instructions 1024 may reside, completely or partially, within at least one of the processors 1012 (e.g., within the processor's cache memory), the memory/storage devices 1018, or any suitable combination thereof. Furthermore, any portion of the instructions 1024 may be transferred to the hardware resources 1002 from any combination of the peripheral devices 1006 or the databases 1008. Accordingly, the memory of the processors 1012, the memory/storage devices 1018, the peripheral devices 1006, and the databases 1008 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects/etc. are merely described in one or more embodiments for clarity, and it is recognized that the parameters/attributes/aspects/etc. can be combined with or substituted for parameters/attributes/etc. of another embodiment unless specifically disclaimed herein.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein.

## Claims

1. A method to be performed by an entity in a wireless network, the method including:
processing UE (702) capability information from a user equipment, UE (702); and
based on the UE (702) capability information from the UE (702), determining a cell identification delay parameter within which the UE (702) is to identify a new detectable cell in the wireless network; wherein
the UE (702) capability information comprises a UE (702) power class supported by the UE (702), and wherein determining the cell identification delay parameter comprises setting the cell identification delay parameter based on the UE (702) power class;
the cell identification delay parameter comprises at least:
a time period used in primary synchronization signal, PSS, detection or secondary synchronization signal, SSS, detection, PSS/SSS detection,; and
a measurement period of a synchronization signal block, SSB, based measurement; and
the method further comprises determining the time period used in the PSS/SSS detection based on the UE (702) power class.

2. The method of claim 1, the method further comprising at least one of:
determining the measurement period based on the power class; or
determining the time period used in the PSS/SSS detection.

3. The method of claim 1, wherein the wireless network supports operation in a first frequency range, frequency range FR1, and a second frequency range, frequency range FR2, wherein the UE is configured to perform receive, Rx, beam sweeping in the frequency range FR2, and wherein the method further comprises determining both the time period used in the PSS/SSS detection and the measurement period based on the power class only for operation within the frequency range FR2.

4. The method of claim 1, wherein the UE capability information further comprises a delay indication by the UE for either a short delay or a long delay for receive, Rx, beam sweeping, and wherein setting the cell identification delay parameter is further based on the delay indication.

5. The method of any preceding claim, wherein the UE capability information comprises a delay indication by the UE for either a short delay or a long delay for receive (Rx) beam sweeping, and wherein determining the cell identification delay parameter further comprises setting the cell identification delay parameter based on the delay indication.

6. An apparatus of a user equipment, UE (702), the apparatus comprising:
a memory interface to send or receive, to or from a memory device, data corresponding to UE (702) capability information including a UE (702) power class supported by the UE (702); and
a processor to:
generate a message to send from the UE (702) to a wireless network, the message comprising the UE (702) capability information; and
based on the UE (702) power class, set a cell identification delay parameter within which the UE (702) is to identify cells in the wireless network;
wherein the cell identification delay parameter comprises at least:
a time period used in primary synchronization signal, PSS detection or secondary synchronization signal, SSS, detection, PSS/SSS detection; and
a measurement period of a synchronization signal block, SSB, based measurement;
wherein the processor is further to determine the time period used in the PSS/SSS detection based on the UE (702) power class.

7. Machine-readable storage including machine-readable instructions, which, when executed by an entity in a wireless network, cause the entity to implement a method as claimed in any of claims 1 to 5

## Patentansprüche

1. Verfahren, das durch eine Entität in einem drahtlosen Netz auszuführen ist, wobei das Verfahren Folgendes enthält:
Verarbeiten von Fähigkeitsinformationen des UE (702) von einem Anwendergerät, UE (702); und
basierend auf den Fähigkeitsinformationen des UE (702) von dem UE (702) Bestimmen eines Zellenidentifikationsverzögerungsparameters, innerhalb dessen das UE (702) eine neue detektierbare Zelle in dem drahtlosen Netz identifizieren soll; wobei
die Fähigkeitsinformationen des UE (702) eine Leistungsklasse des UE (702) umfassen, die durch das UE (702) unterstützt wird, und wobei das Bestimmen des Zellenidentifikationsverzögerungsparameters das Festlegen des Zellenidentifikationsverzögerungsparameters basierend auf der Leistungsklasse des UE (702) umfasst;
wobei der Zellenidentifikationsverzögerungsparameter wenigstens Folgendes umfasst:
einen Zeitraum, der bei einer Detektion eines primären Synchronisationssignals, PSS-Detektion, oder einer Detektion eines sekundären Synchronisationssignals, SSS-Detektion, PSS/SSS-Detektion verwendet wird; und
einen Messzeitraum einer auf einem Synchronisationssignalblock, SSB, basierenden Messung;
wobei
das Verfahren ferner das Bestimmen des Zeitraums, der bei der PSS/SSS-Detektion verwendet wird, basierend auf der Leistungsklasse des UE (702) umfasst.

2. Verfahren nach Anspruch 1, wobei das Verfahren ferner wenigstens eines des Folgenden umfasst:
Bestimmen des Messzeitraums basierend auf der Leistungsklasse; oder
Bestimmen des Zeitraums, der bei der PSS/SSS-Detektion verwendet wird.

3. Verfahren nach Anspruch 1, wobei das drahtlose Netz einen Betrieb in einem ersten Frequenzbereich, Frequenzbereich FR1, und einem zweiten Frequenzbereich, Frequenzbereich FR2, unterstützt, wobei das UE konfiguriert ist, ein Empfangsstrahlabtasten, Rx-Strahlabtasten, in dem Frequenzbereich FR2 auszuführen, und wobei das Verfahren ferner Bestimmen sowohl des bei der PSS/SSS-Detektion verwendeten Zeitraums als auch des Messzeitraums basierend auf der Leistungsklasse nur für den Betrieb innerhalb des Frequenzbereichs FR2 umfasst.

4. Verfahren nach Anspruch 1, wobei die Fähigkeitsinformationen des UE ferner eine Verzögerungsangabe durch das UE für entweder eine kurze Verzögerung oder eine lange Verzögerung für das Empfangsstrahlabtasten, Rx-Strahlabtasten, umfassen und wobei das Festlegen des Zellenidentifikationsverzögerungsparameters ferner auf der Verzögerungsangabe basiert.

5. Verfahren nach einem der vorstehenden Ansprüche, wobei die Fähigkeitsinformationen des UE eine Verzögerungsangabe durch das UE für entweder eine kurze Verzögerung oder eine lange Verzögerung für das Empfangsstrahlabtasten (Rx-Strahlabtasten) umfassen, und wobei das Bestimmen des Zellenidentifikationsverzögerungsparameters ferner das Festlegen des Zellenidentifikationsverzögerungsparameters basierend auf der Verzögerungsangabe umfasst.

6. Vorrichtung eines Anwendergeräts, UE, (702), wobei die Vorrichtung Folgendes umfasst:
eine Speicherschnittstelle, um Daten, die den Fähigkeitsinformationen des UE (702) entsprechen, einschließlich einer Leistungsklasse des UE (702), die durch das UE(702) unterstützt wird, an eine Speichervorrichtung zu senden oder von einer Speichervorrichtung zu empfangen; und
einen Prozessor, um:
eine Nachricht, die von dem UE (702) an ein drahtlosen Netz zu senden ist, zu erzeugen, wobei die Nachricht die Fähigkeitsinformationen des UE (702) umfasst; und
basierend auf der Leistungsklasse des UE (702) einen Zellenidentifikationsverzögerungsparameter festzulegen, innerhalb dessen das UE (702) Zellen in dem drahtlosen Netz identifizieren soll;
wobei der Zellenidentifikationsverzögerungsparameter wenigstens Folgendes umfasst:
einen Zeitraum, der bei einer Detektion eines primären Synchronisationssignals, PSS-Detektion, oder einer Detektion eines sekundären Synchronisationssignals, SSS-Detektion, PSS/SSS-Detektion verwendet wird; und
einen Messzeitraum einer auf einem Synchronisationssignalblock, SSB, basierenden Messung;
wobei der Prozessor ferner den Zeitraum, der bei der PSS/SSS-Detektion verwendet wird, basierend auf der Leistungsklasse des UE (702) bestimmen soll.

7. Maschinenlesbares Speichermedium, das maschinenlesbare Anweisungen enthält, die, wenn sie durch eine Entität in einem drahtlosen Netz ausgeführt werden, die Entität veranlassen, ein Verfahren nach einem der Ansprüche 1 bis 5 zu implementieren.

## Revendications

1. Procédé destiné à être mis en œuvre par une entité dans un réseau sans fil, le procédé comportant :
le traitement d'informations de capacité d'UE (702) provenant d'un équipement utilisateur, UE (702) ; et
sur la base des informations de capacité de l'UE (702) provenant de l'UE (702), la détermination d'un paramètre de retard d'identification de cellule dans lequel l'UE (702) doit identifier une nouvelle cellule détectable dans le réseau sans fil ; dans lequel
les informations de capacité de l'UE (702) comprennent une classe de puissance de l'UE (702) supportée par l'UE (702), et dans lequel la détermination du paramètre de retard d'identification de cellule comprend le réglage du paramètre de retard d'identification de cellule sur la base de la classe de puissance de l'UE (702) ;
le paramètre de retard d'identification de cellule comprend au moins :
une période de temps utilisée dans un détection PSS/SSS, de détection d'un signal de synchronisation primaire, PSS, ou de détection d'un signal de synchronisation secondaire, SSS ; et
une période de mesure d'une mesure basée sur un bloc de signal de synchronisation, SSB ; et
le procédé comprend en outre la détermination de la période de temps utilisée dans la détection PSS/SSS sur la base de la classe de puissance de l'UE (702).

2. Procédé selon la revendication 1, le procédé comprenant en outre au moins d'une des étapes suivantes :
la détermination de la période de mesure sur la base de la classe de puissance ; ou
la détermination de la période de temps utilisée dans la détection PSS/SSS.

3. Procédé selon la revendication 1, dans lequel le réseau sans fil supporte un fonctionnement dans une première plage de fréquences, plage de fréquences FR1, et une seconde plage de fréquences, plage de fréquences FR2, l'UE étant configuré pour effectuer un balayage de faisceau de réception, Rx, dans la plage de fréquences FR2, et le procédé comprenant en outre la détermination à la fois de la période de temps utilisée dans la détection PSS/SSS et de la période de mesure sur la base de la classe de puissance uniquement pour un fonctionnement dans la plage de fréquence FR2.

4. Procédé selon la revendication 1, dans lequel les informations de capacité d'UE comprennent en outre une indication de retard par l'UE pour un retard court ou un retard long pour le balayage du faisceau de réception, Rx, et dans lequel le réglage du paramètre de retard d'identification de cellule est en outre basé sur l'indication de retard.

5. Procédé selon l'une quelconque des revendications précédentes, dans lequel les informations de capacité de l'UE comprennent une indication de retard par l'UE un retard court ou un retard long pour le balayage du faisceau de réception (Rx) et dans lequel la détermination du paramètre de retard d'identification de cellule comprend en outre le réglage du paramètre de retard d'identification de cellule sur la base de l'indication de retard.

6. Appareil d'un équipement d'utilisateur, UE (702), l'appareil comprenant :
une interface mémoire destinée à envoyer ou recevoir, vers ou depuis un dispositif mémoire, des données correspondant à des informations de capacité de l'UE (702) incluant une classe de puissance de l'UE (702) supportée par l'UE (702) ; et
un processeur pour :
générer un message à envoyer de l'UE (702) à un réseau sans fil, le message comprenant les informations de capacité de l'UE (702) ; et
sur la base de la classe de puissance de l'UE (702), définir un paramètre de retard d'identification de cellule pendant lequel l'UE (702) doit identifier des cellules dans le réseau sans fil ;
dans lequel le paramètre de retard d'identification de cellule comprend au moins :
une période de temps utilisée dans un détection PSS/SSS, de détection d'un signal de synchronisation primaire, PSS, ou de détection d'un signal de synchronisation secondaire, SSS ; et
une période de mesure d'une mesure basée sur un bloc de signal de synchronisation, SSB ;
le processeur étant en outre destiné à déterminer la période de temps utilisée dans la détection PSS/SSS sur la base de la classe de puissance de l'UE (702).

7. Stockage lisible par une machine incluant des instructions lisibles par une machine qui, lorsqu'elles sont exécutées par une entité d'un réseau sans fil, amènent l'entité à mettre en œuvre un procédé selon l'une quelconque des revendications 1 à 5.
